# EUROPEAN PATENT APPLICATION

(11) **EP 1 168 162 A2**
(43) Date of publication of application: **02.01.2002**
(21) Application number: 01304358.3
(22) Date of filing: 16.05.2001
(51) Int. Cl.: G06F 9/44

(54) **Tag-based user interface**

(30) Priority: 30.06.2000 US 607369
(71) Applicant: Nokia Corporation, 02150 Espoo (FI)
(72) Inventor: Paajanen, Samu, 00150 Helsinki (FI)
(74) Representative: Read, Matthew Charles

(57) **Abstract**

The invention provides a method for converting one machine readable language into another by applying instructions to style templates. The invention provides a high level construct created from a set of lower lever tags. A man machine interface (MMI) may be created by using said constructs.

## Description

### FIELD OF THE INVENTION

This invention relates to user interfaces, and in particular an user interface wherein the user views are generated dynamically.

### BACKGROUND OF THE INVENTION

World Wide Web (WWW) applications have been implemented so that each user view, or screen, is one entity. An entry is usually a static file created in a mark-up language such as HyperText Mark-up Language (HTML), eXtensible Mark-up Language (XML) and the like or mark-up language with some dynamically created parts such as a JSP or ASP file. Dynamic HTML (DHTML) is made up of HTML, JavaScript, and Cascading Style Sheets (CSS) and allows HTML page to be dynamically changed.

This implementation works well with information on a page. However, if content on the page changes dynamically, or the developer would like to place interactivity such as buttons and the like, the implementation fails. Therefore it is difficult to create a user interface views in mark-up language.

The coding the parts of a user interface can be time consuming, error prone, and unmanageable. What is needed are higher level constructs which will allow for fast and easier programming.

Thus, the need arises, for a method and constructs which will allow an dynamic web content to be developed in less time and with less trouble.

### SUMMARY OF THE INVENTION

In accordance with the present invention, there is provided a method for generating display instructions by converting a templates containing style information into a final form which converts data created in one language into a second language.

Also provided is a high level construct created by a set of lower level mark-up language tags.

Additional features and advantages of the invention will be readily apparent from the specification and from the drawings.

### BRIEF DESCRIPTION OF THE DRAWINGS

Fig. 1 is a block diagram representation of a communication network having mobile terminals that are capable of communicating with a mobile display appliance (MDA) system having a MDA server with related services.
Fig. 2 is a more detailed block diagram representation of the MDA server of the MDA system of the network of Fig.1.
Fig. 3 is a more detailed block diagram of a mobile terminal that operates within the MDA system of Fig. 1
Fig. 4 is an illustration of the component model of the present invention.
Fig. 5 is a flowchart showing the page generation process in accordance with an embodiment of the current invention.
Fig. 6 shows an example of localized component specifications in accordance with an embodiment of the current invention.

### DETAILED DESCRIPTION.

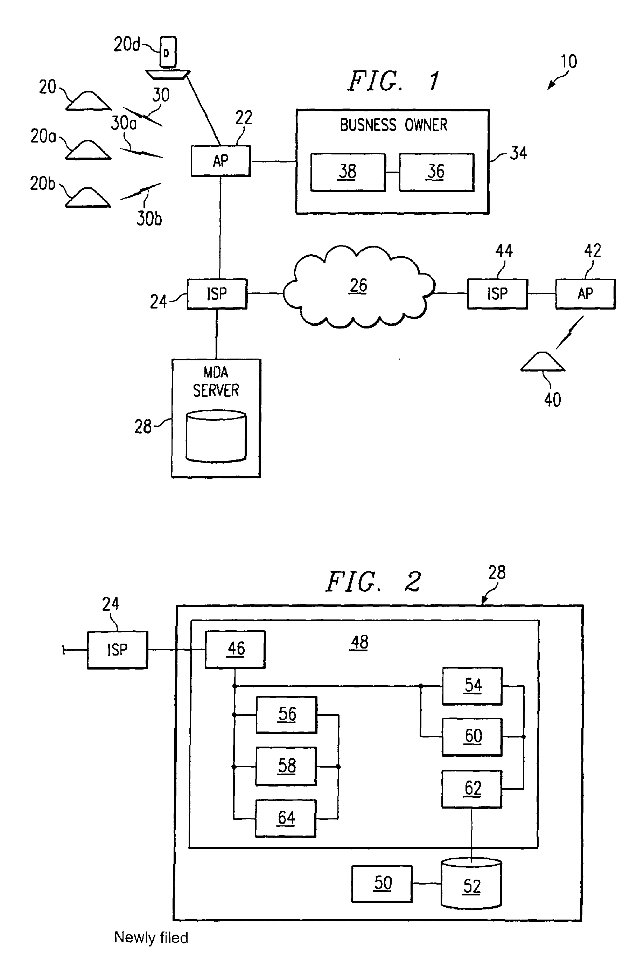

Referring now to Fig. 1, a network 10 includes a terminal 20 coupled to an access point 22. The access point 22 is coupled to an Internet Service Provider (ISP) 24, which is coupled to an Internet 26. Accordingly, the access point 22 has an internet address relative to the internet address of the ISP 24. Additionally, the ISP 24 is coupled to a Mobile Display Appliance (MDA) server 28 that provides the user, through the terminal 20, with specific services and features, which will be discussed in detail herein.

The terminal 20 may be a hand held mobile radio telecommunications device that includes a virtual keyboard, a two-fingered navigational tool and a two-fingered pressure sensitive special click-drag-drop feature. The MDA server 28 provides services such as email, calendar, notes, ability to shop on line and necessary authentication, as well as third party services and information.

Terminals 20, 20a, and 20b are coupled to the access point 22 via wireless connections 30, 30a, and 30b, respectively, and, hence, the user has portable or mobile access to the Internet 26 and the services provided by the MDA server 28. Additionally, a personal computer (PC) terminal 21 is coupled to the access point 22 via a land line 31. The terminal 21 can be used to access the MDA server 28 using special authentication by any user authorized to access the information and services provided by the MDA server 28. However, the authentication for the user using the terminal 21, which is discussed herein, is slightly different from the authentication procedure for the terminals 20, 20a, 20b, and 20c. More specifically, the terminal 20 is coupled to the access point 22 using a Wireless Local-Area-Network Gateway (WLAN GW) that is installed at a specific location, such as the user's premises or location. In the preferred embodiment, the WLAN GW interface uses Ethernet 802.11 transfer protocol. However, other wireless interface protocols, such as GPRS of Global System for Mobile Communications (GSM+), Universal Mobile Telecommunication Systems (UMTS), or other LAN, may be used without limiting the scope of the present invention as set forth in the claims hereinafter. If the terminal 20 is powered on and within range of the access point 22, then Ethernet protocol is used as a transfer protocol in order to establish and maintain a communication link.

Although the preferred embodiment shows the terminal 20 coupled to the MDA server 28 through the ISP 24, the scope of the present invention, as set forth in the claims, is not limited thereby. For example, the terminal 20 may be coupled directly to the MDA server 28 through the access point 22. Regardless of how the terminal 20 is coupled to the MDA server 28, once the terminal 20 is authenticated, as will be discussed herein, it can function as an Internet browser to access the Internet 26 with the additional ability to retrieve services and information from the MDA server 28. Furthermore, in the embodiment set forth herein, the ISP 24 is separate from and not acting as the MDA server 28 and vice versa, even though this is possible to combine them into one unit.

It will be apparent to those skilled in the art that even though the preferred embodiment shows that the access point 22 coupled to the ISP 24 through a land line 32, the scope of the present invention as set forth in the claims is not limited thereby. For example, the access point 22 can be wirelessly coupled to the ISP 24. Thus, in the preferred embodiment, the terminal 20 accesses the ISP 24 through the access point 22 and, thus, the user can access, navigate through, and retrieve information from the Internet 26 using the terminal 20.

In order for a terminal, such as terminal 20, to have access to the services of the MDA server 28, the MDA server 28 must authenticate and authorize the terminal's access. Although only the authentication and authorization procedure relating to the terminal 20 are discussed in detail, the teachings set forth herein are also applicable to other terminals. Upon proper authentication of the terminal 20 the user can access the services of the MDA server 28 at the authorized level of authentication.

Generally stated, if the terminal 20 is powered on and authenticated by the MDA server 28, then information or services from the MDA server 28 are downloaded to the terminal 20. The MDA server 28 downloads information, such as profile setting for the family. One profile setting that can be downloaded is language preferences for a family communication session. Other information or services may include configuration data, driver or application related software or portions thereof, configurable parameters, partial sections of system software, or configurable parameters depending on the level of authentication that has occurred with respect to the user. Additionally, the terminal can have access through proper authentication and service purchases to third party publications available from a vendor 33, such as news related information found in magazine publications or the daily newspaper. It will be apparent to those skilled in the art that the information may be purchased by the user and then transmitted by the vendor 33 upon request of the user's family at the MDA server 28 and then to all terminal within the terminal 20; alternatively, the information could be purchased by an operator/owner of the services provided by the MDA terminal 28 and then resold to each family as requested. Thus, a family profile could may also include access to the information services of the vendor 33 that can be made available to the family or just the user, depending on the authentication.

There are two levels of authentication that provide access to the services and information of the MDA server 28: the family level and the private level. The family level is a level of authentication that occurs based on the identity of the terminal 20 in order to initiate a family session. In order to create a family, at least one terminal is needed, but typically there are several terminals that make up a family, such as terminals 20a, 20b, and 20c, and each terminal has a unique identity that allows that terminal access to a family session at the family level. Furthermore, each family includes a specific family profile and this family profile is downloaded during a family session from the MDA server 28. Thus, anyone having access to the terminal 20 would have access to the family level information and services, such as calendar, e-mail, bookmarks, cookies, and e-publication, all of which are set up for the family. As will be discussed herein, these same services may be available to the user at the private level, but the content of the information would vary. The MDA server 28 includes storage capacity for storing data related to the family in a family specific storage unit that can be accessed and used by all terminals within the family once the terminal has been authenticated and the family session initiated.

In the preferred embodiment, the family level authentication is based on the identity of the hardware of the terminal 20 and the authentication occurs automatically to initiate the family session once the terminal 20 is powered on. Even though the authentication at the family level occurs automatically, the scope of the invention as set forth in the claims is not limited thereby. For example, the terminal 20 could request input from the user in order to initiate the family level authentication process. Once the terminal 20 is authorized to access the services, then each user of the terminal 20 is able to access information and services that are available to all users in the family as well as initiate a private communication session to access private information and services available only to that user, provided the user has a profile associated with family associated with the terminal that has established the family session that is in progress.

Unlike the family session at the family level, a private session at the private level is a level of authentication that requires input from the user to allow the user of a terminal, such as the terminal 20 or the terminal 20c, access to information intended only for that user. For example, the user could use any terminal that is within the user's family and initiate a private session to access information and services specific to that user. The authentication can be done using anything that is unique and only known by that user, such as a password. Thus, the user can initiate a private session regardless of which terminal is being used. When the user activates a private session then configuration parameters, which are specific to the user, are downloaded to the terminal 20. Although in the preferred embodiment a user must be have a profile associated with the same family that the terminal's profile is associates, the scope and sprite of the present invention is not limited thereby. For example, the network 10 could be set up to allow a user access from any terminal regardless of the association between the user, the terminal 20, and the family as long as the user can be authenticated by the MDA server 28. This is similar to the way a user would gain access to the MDA server 28 from the terminal 21.

As indicated above, anyone having access to the terminal 20 would have access to the family level information and services, because authentication is based on the terminal 20 and occurs automatically and the family session is always active when the terminal 20 is powered on. Even though any user of the terminal 20 can have access to information and services at the family level, only a designated user can change the family or take actions on behalf of the family. In the preferred embodiment, one or two users within the family are typically designated to have administrative rights for the family. The user/users with administrative rights are called a family administrator. The family administrator has the right to alter family profiles and the information related to the family administrator is stored in the MDA server 28 and administration access can be authenticated by a password. The family administrator, once authenticated, can alter the family profile settings, add or delete terminal profiles form the family profile, and add or delete user profiles form the family profile.

One family setting that the family administrator can select is the language setting for the family sessions. However, each user can select his or her own language preference for the private sessions. For example, in a multilingual family the family language can be one specific language, while the language for each user may be different during the private session for that user. Then depending on the session type, which is either family or private, the terminal 20 will show text in the selected language, which is established in the family or private profile, respectively.

Additionally, the family administrator can have access to purchasing services that may require the ordering party to be of legal age for the purpose of ordering or purchasing additional services, such as news or publication services. Thus, while all users of the terminal would have access to family level services, such as access to the internet, they would not be able to make administrative decision, unless they were authenticated as the family administrator. Accordingly, the family is protected from unauthorized or unwanted alteration of family profile as well as financial commitments from occurring at the family level from the terminal 20, especially given that the identity of the user of the terminal 20 is not unknown at the family level yet that user has access to the MDA server 28 as well as the internet 26 through the terminal 20 coupled to the ISP 24.

Continuing with Fig. 1, in addition to the ISP 24, the access point 22 is also coupled to a global unit or business owner 34. As indicated, the access point 22 may be coupled directly to the business owner 34 through a link 35a. Alternatively, the access point 22 may be coupled indirectly to business owner 34 through a land line 32, the ISP 24, and a link 35b.

The business owner 34 includes a global address server 36, a global upgrade server 38, and a firewall unit 40. It will be apparent to those skilled in the art that the firewall unit 40 functions to provide secured access to the global address server 36 and the global upgrade server 38.

In the preferred embodiment, the internet address of the business unit 34 with the global address sever 36 is permanently contained in the memory of the terminal 20. Even though reference is made hereinafter only to the internet address of the global address server 36 without specific reference to the internet address of the business owner 34, it will be apparent to those skilled in the art that the internet addresses for the two may be the same or could be slightly different depending on configuration parameters. The global address server 36 is a place from which all the terminals, such as terminals 20, 20a, 20b, and 20c, can fetch the internet address of their respective MDA server. The advantage of having the terminal 20 store the internet address of the global address server 36 is that if the terminal 20 was relocated near another access point, then the terminal 20 can still obtain the internet address location of the MDA server 28 simply by knowing the internet address of the global address server 36. However, the scope of the invention as set forth in the claims is not limited thereby. For example, the internet address of the MDA server 28 could be stored on the terminal 20 and the memory of the terminal 20 could be updated as needed.

An advantage to storing the internet address of the global address server 36 on the terminal 20 is that the association between terminal and MDA server as well as changes in the internet address of MDA servers can be easily and efficiently updated without having to update the memory of each terminal. The global update server 38 updates the global address sever 36 each time there is a change in the association between terminal and MDA server, when there are new terminals to associate with an MDA server, or if the internet address of a particular MDA server is changed.

With the internet address of the global address server 36 stored in the memory of the terminal 20, the terminal 20 is able to request and retrieve the internet address of the MDA server 28 from the global address sever 36. The global address server 36 stores information about the location of the MDA server 28 and all other MDA servers in the network and the corresponding relation between each terminal and its MDA server. Thus, the terminal 20 is always able to obtain the address of the MDA server 28, which is the MDA server designed to serve the terminal 20. For example, the terminal 20c coupled through an access point 42 to an ISP 44 can retrieve the internet address of the MDA server 28 from the global address server 36, provided that the MDA server 28 is the MDA server designated to serve the terminal 20c and that the terminal 20c is authenticated by the MDA server 28 as an authorized user of the services.

Referring now to Fig 2, the MDA server 28 includes a support server 46, an application server 48, a network application server 50, and a directory server 52. It will be apparent to those skilled in the art that the referenced connections do not depict the physical connections between the logical elements; the emphasis is merely on the logical connections. The support server 46 provides services oriented towards enabling and supporting the services provided to the terminal 20. The support server 46 includes an upgrade service unit 54, a login services unit 56, a profile services unit 58, an advertisement services unit 60, an administrative services unit 62, a defined services unit 64, and a directory client unit 66.

The upgrade services unit 54 is a specific means for controlled software upgrade of the software for the support server 48. Updates are transmitted from the global upgrade server 38 to the upgrade service unit 54. The login services unit 56 provides the means for authentication of the user and the terminal 20 that is being used to access the services based on information provided by the client unit 66. Additionally, the login services unit 56 is also responsible for log-off activities, such as private session termination. The profile services unit 58 provides a means for modifying a user's profile information, e.g. family and private information and preferences. The administration services unit 62 provides a means for administration of the support server 46 and the application server 48. The advertisement services unit 60 provides a means for the MDA server 28 to tailor advertisements to the user and the terminal 20 according to the user's profile information. The defined services unit 64 is a classification of 'other services' containing items like bookmark management services, help services, log services, name management services, and general management services. The directory client unit 66 is coupled to the directory server 52 to provide client verification

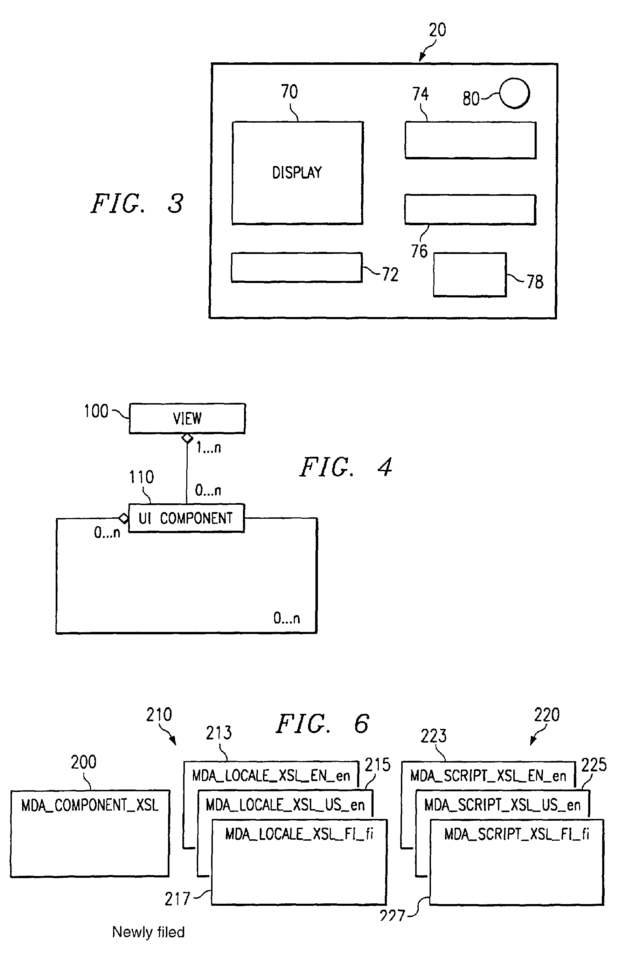

Referring now to Fig. 3, the terminal 20 includes a display 70, a user interface (UI) framework 72, a browser 74, a driver 76, and hardware 78. The user interface―which may also be referred to as a Man-Machine Interface (MMI)--can be logically divided into components (or constructs), such as buttons, groups of buttons, folders, folder items and the like. Each component may be constructed of a set of sub-components.

In different description languages, such as HTML and the like, a user interface may be constructed of a set of tags. These tags may be grouped and the new group be represented as a new tag. This tag may be referred to as a component. Thus, a set of new tags may be in turn group to form a novel higher level component.

In web applications, the components from which the user interface is constructed may unfolded and stored in the server before the application is started.

Creating an user interface by using the novel higher level components of the present invention requires less code thereby making development of the user interface easier, faster and less error-prone. These new higher level components also make the resulting code is also more manageable by reducing the amount of lines needed to describe the user interface.

Local specific tags and text may be hidden in the components making localization easy. Additionally, the local settings may be changed in run-time. Therefore, web pages may be local in run-time; thereby, the language and other local setting can be easily changed.

Referring again to Fig. 3, the driver 76 resides in the memory of the hardware 78 along with other data, such as the internet address of the global address server 36 and software, such as the browser 74. As the terminal 20 is turned on, the driver 76 retrieves data relating to the internet address of the global address server 36. In the preferred embodiment, the driver 76 is EPOC6, which is an operating system software that handles hardware related functions in the terminal as well as offer a functioning environment to the application layer programs. Once the terminal 20 is power on, it is coupled to the access point 22 and the ISP 24. Thus, the terminal 20 is able to obtain its own internet address.

Using the internet address of the global address server 36, the terminal 20 is coupled to the global address server 36 and sends a request in order to obtain the internet address of the MDA server 28. Once the terminal 20 has the internet address of its MDA server 20, it is then coupled to the MDA server 28. The MDA server 28 authenticates, using the unique identity of the hardware 78 of the terminal 20, that the terminal 20 has family level access privileges. Accordingly, the terminal 20 is authenticated and logged onto the MDA server 28 to begin a family session at a family level. Thus, the user can now access services or retrieve information from the MDA server 28 or the Internet 26. In order for the user to initiate a private session and retrieve private information, the user must use the terminal 20 and provide further authentication to the MDA server 28 to gain access at the private level. It will be apparent to those skilled in the art that at either the family level or the private level, the user is able to the retrieve information related to the family of users as well as browse the Internet 26 to retrieve information.

The browser 74 is a typical browser and includes such features as HyperText Transfer Protocol (HTTP), JAVA script, and cascade style sheet capability. As with typical Personal Computers (PCs), the browser 74 helps the user navigate through and retrieve information from the Internet once the user is connected to the ISP 24 through the terminal 20. The user utilizes the terminal 20 to connect to both the ISP 24 and the MDA server 28 using authentication protocol as discussed in detail herein. The terminal 20 is the primary means of access by the user to the MDA server 28 and the related services and applications. However, the user can also access the ISP 24 and the MDA server 28 using the terminal 21 or non-mobile terminal using appropriate family level authentication initiated manually.

In order to retrieve information or request services from the MDA server 28 or the Internet 26, the user provides input through the UI framework 72. The user can provide input using a virtual keyboard displayed on the display 70. Even though the virtual keyboard is used as the user retrieves information from the Internet 26, such as a web page, the user can receive the information at the display 70 of the terminal 20 in a full screen format. Full screen format is available because the UI framework 72 disappears when the user types a Universal Resource Locator (URL) or follows a hyperlink while navigating the Internet 26. In order to return to the UI framework 72, the user presses a button 80 and the virtual keyboard as well as the header and footer related to the services are presented again. Additionally, once the user presses the button 80 the web page, which was a full screen displayed prior to pressing the button 80, is reduced to a thumbnail view and positioned in the display 70, such as in the bottom left corner of the footer. Consequently, the user has a shortcut to quickly access the web page that was previously visited or to save that web page as a bookmark.

In a preferred embodiment of the present invention, content and layout are separated. The content is XML or other similar mark-up language, which is usually dynamically generated by different services. Screen layouts are defined in eXtensible Style Language (XSL) or other similar style language. Additionally, XSL layouts are composed of components, which are sets of lower-level tags.

User views are created dynamically by putting together the XML and the XSL. The XSL data is also constructed dynamically. Higher level component tags are unfolded in runtime. The unfolded XSL files are cached in memory in Java Virtual Machine's internal object form for fast response times.

Fig. 4 is an illustration of the component model in accordance with an embodiment of the present invention. View 100 may contain a plurality (1 to n : with n being an integer) of possible components. The UI component 110 is used in at least one view, but it can be used in any number of views (1 to n). Furthermore, the same component may be inside many components or none (thus, 0 to n).

There are three types of components which may be used in XSL templates. The following tag names are used for these types:
COMPONENTS_COMP
COMPONENTS_LOCAL
COMPONENTS_SCRIPT

COMPONENTS_COMP may contain any set of tags,
COMPONENTS_LOCAL may be used for localization. COMPONENTS_LOCAL may contain basically any tags which need to be localized, but mostly COMPONENTS_LOCAL contains text strings. COMPONENTS_SCRIPT is a fragment of script language, e.g. JavaScript and the like.

This invention has been described relative to specific embodiments. The MDA environment in which the preferred embodiment operates is used as an exemplar only. The names of the tags are for use for the MDA terminal. The software examples have been written in Finland and thus the spelling of certain words may be different. For example, LOCALE is spelled with an E instead of LOCAL. Modifications that become apparent to persons of ordinary skill in the art only after reading this document are deemed within the spirit and scope of the invention.

In the preferred embodiment of the present invention, the following tag names are used for these types:
MDA_COMPONENT
MDA_LOCALE
MDA_SCRIPT

As mention above but repeated with the preferred embodiment names. MDA_COMPONENT may contain any set of tags, MDA_LOCALE may be used for localization. MDA_LOCALE may contain basically any tags which need to be localized, but mostly MDA_LOCALE contains text strings. MDA_SCRIPT is a fragment of script language, e.g. JavaScript and the like.

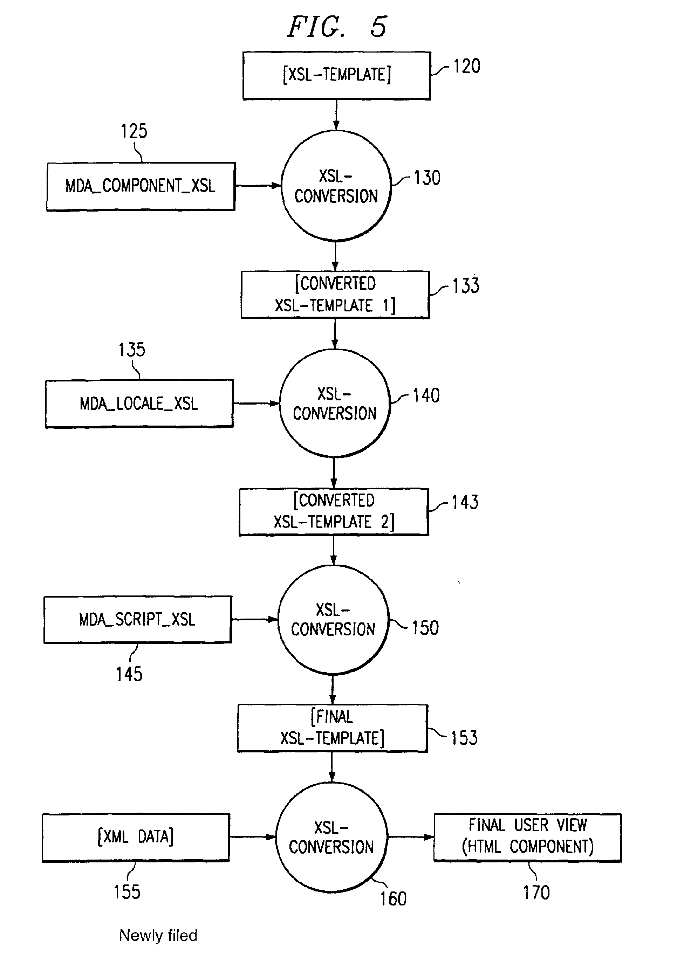

Fig. 5 is an illustration of the page generation process. Pages are generated so that the original XSL-template (with components included) 120 goes through three conversions 130, 140, and 150. In the first conversion 130, all components of type MDA_COMPONENT are unfolded using instructions which are given by MDA_COMPONENT_XSL 125. First conversion 130 results in converted XSL-template-1 133. The second conversion 140 unfolds all MDA_LOCALE components using instruction provided by MDA_LOCALE 135. Second conversion 140 results in converted XSL-template-2 143. A third conversion 150 unfolds MDA_SCRIPT components using instructions provided by MDA_SCRIPT_XSL 145. Third conversion 150 results in final XSL template 153 . The above described process is referred to as XSL generation and results, as stated above, final XSL template 153, which is cached into memory of terminal 20.

Final template 153 may then be combined with the XML data 155 returned by the services which are shown in figs. 1 and 2 and described in co-pending United States Patent Application Serial Number filed on , entitled NETWORK WITH MOBILE TERMINALS HAVING WIRELESS ACCESS TO THE INTERNET AND METHOD FOR DOING SAME and herein incorporated by reference. A last conversion 160 takes the XML data 155 which may be instructions and combines it with the final template 153 which results in instructions to create a final user view in the case of our example―HTML component.

Components of type MDA_COMPONENT may contain other components. However, there must not be any unending recursion. Components of type MDA_COMPONENT are processed recursively as is shown in fig. 4. The instructions provided by MDA_COMPONENT_XSL are applied to all components of type MDA_COMPONENT until all such components are unfolded. There is no need to process the components of type MDA_LOCALE or MDA_SCRIPT recursively because they can never contain other component tags.

In run time environment, there is only one file for the definitions of components of type MDA_COMPONENT. For the components of type MDA_LOCAL and MDA_SCRIPT there is one file of each supported language. Fig. 6 shows the localized component specifications.

Referring to Fig. 6, There is one COMPONENT type file MDA_COMPONENT_XSL. However, there may be one LOCALE type 210 for each language. In this example, MDA_LOCALE_XSL_EN_en for English 213, MDA_LOCALE_XSL_US_en for Standard American English 215, and MDA_LOCALE_XSL_FI_en for FINNISH 217. There can also be multiple SCRIPT type 220 files. For example, MDA_ SCRIPT_XSL_EN_en for English 223, MDA_ SCRIPT_XSL_US_en for Standard American English 225, and MDA_ SCRIPT_XSL_FI_en for Finnish 227.

The following are example of code to build views using XSL and XML, other style and mark-up languages and modifications may be used without departing from the spirit and scope of the invention.

### A first example:

In this first example an HTML-based UI-layout (file UI_EXAMPLE) contains one component of type MDA_COMPONENT, and two components called MDA_LOCALE. The definitions of the components are given in XSL-files called COMPONENTS_COMP and COMPONENTS_LOCALE.

When component definitions given in COMPONENTS_COMP are applied to file UI_EXAMPLE, the components of type MDA_COMPONENT are replaced with the sets of tags specified in file COMPONENTS_COMP. In this first example, there is just one component called "form1". The resulting file is called CONVERTED_UI_EXAMPLE.

CONVERTED_UI_EXAMPLE contains components of type MDA_LOCALE. When COMPONENTS_LOCALE is applied to CONVERTED_UI_EXAMPLE, the components of type MDA_LOCALE are replaced with texts and tags given in file COMPONENTS_LOCALE. The resulting file is called
FINAL_RESULT_UI_EXAMPLE.The files are shown below:

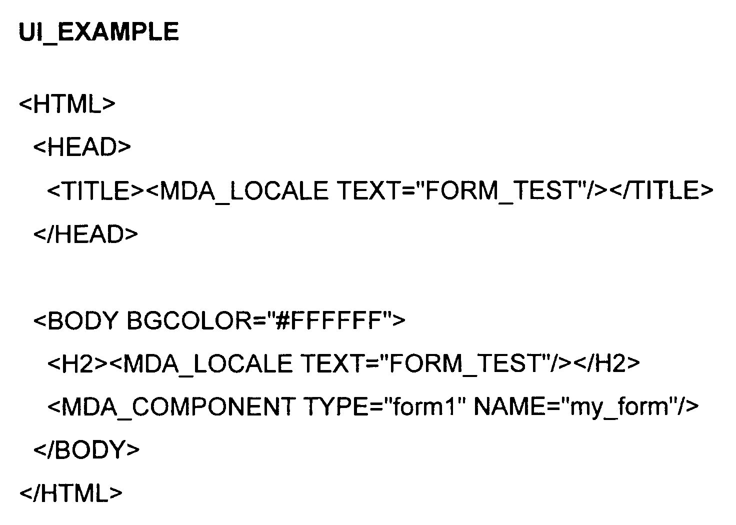

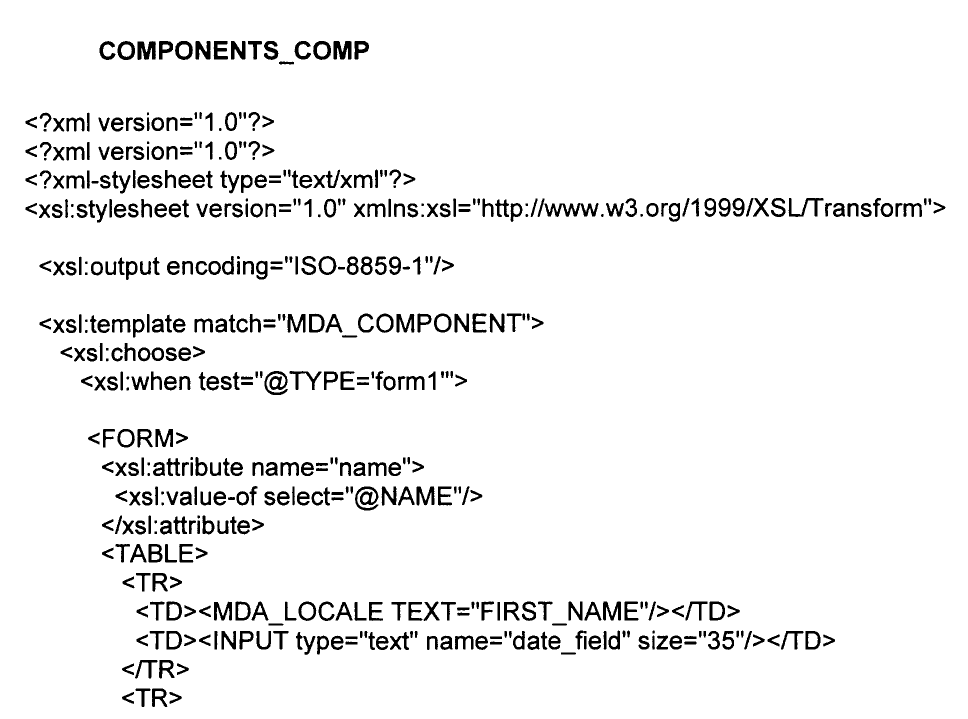

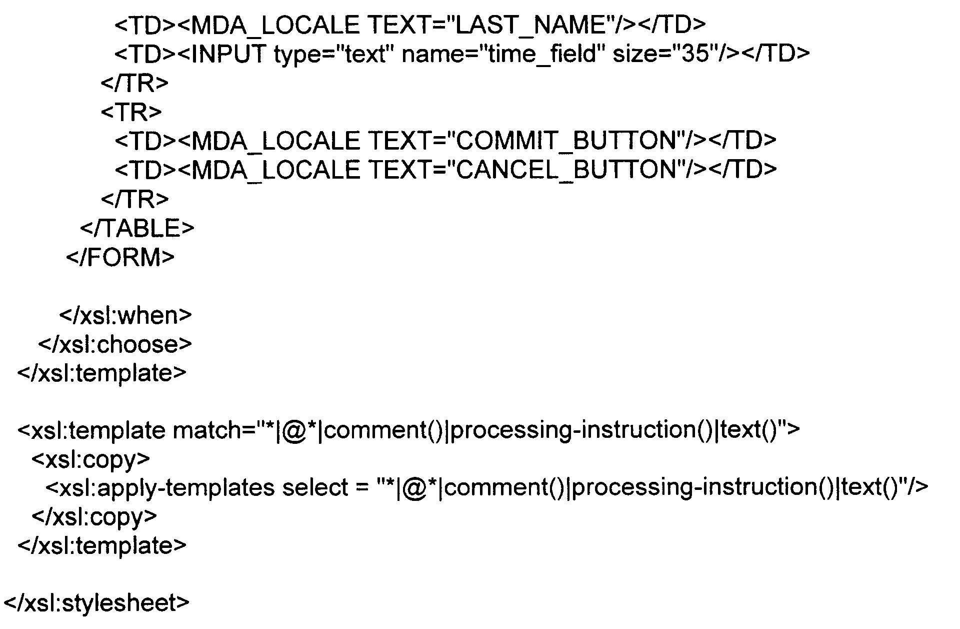

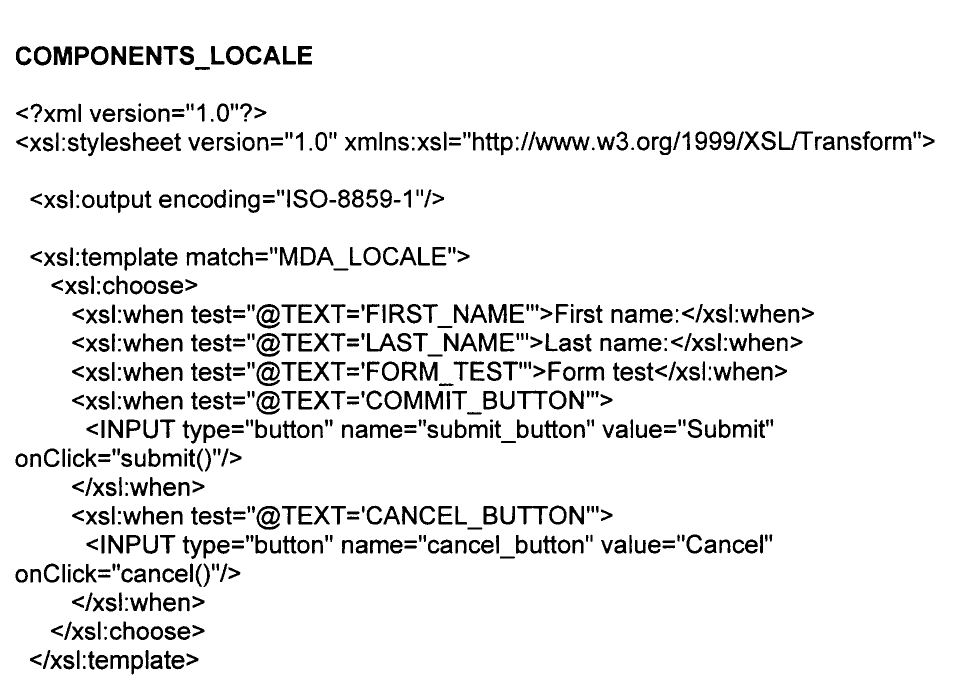

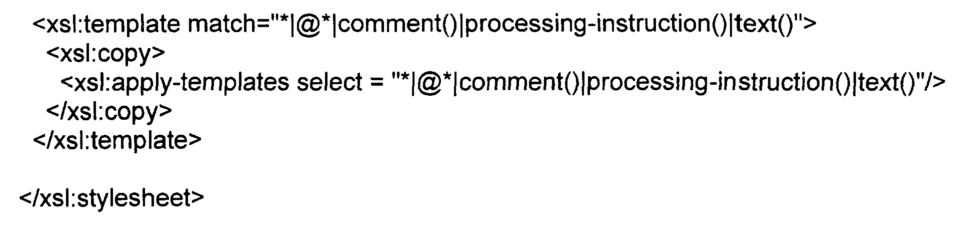

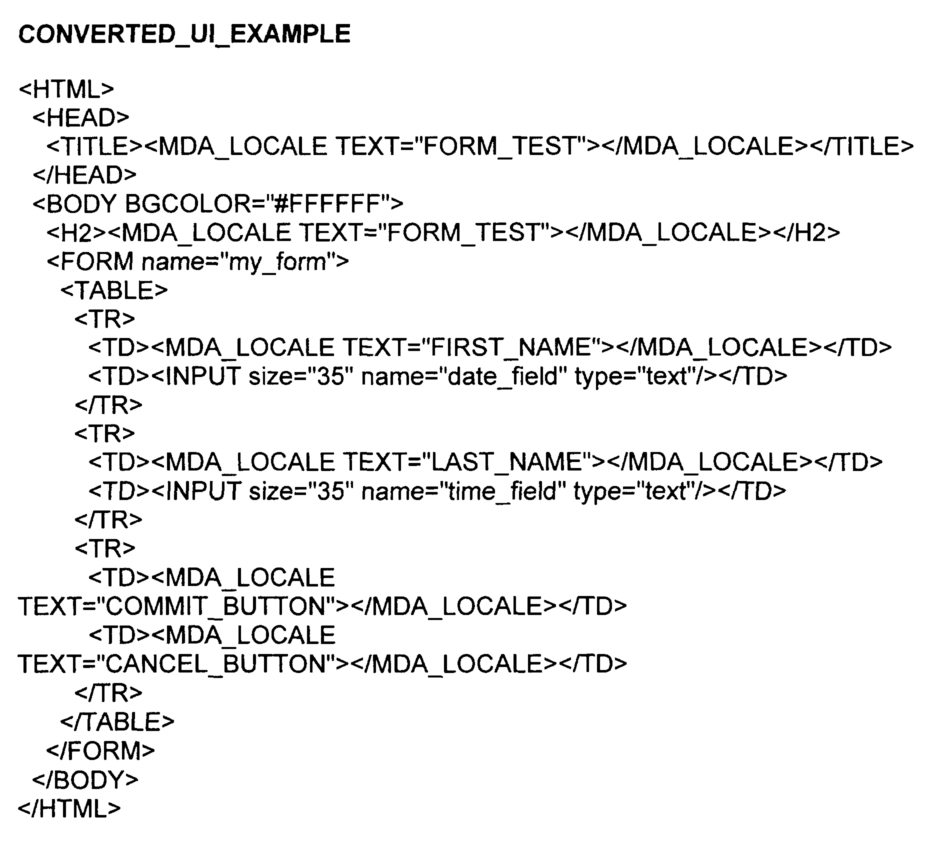

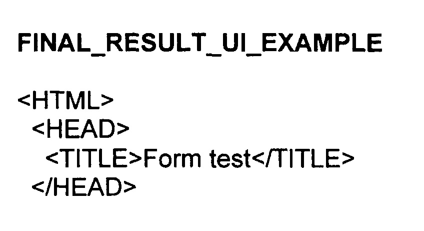

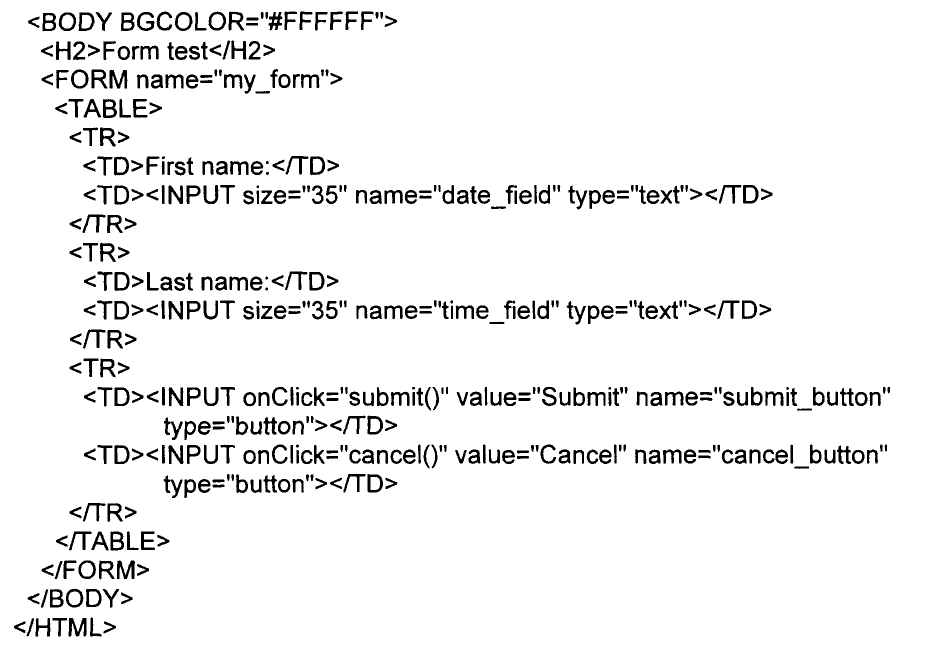

As with any style sheet or mark-up language, all XSL-files should tell the XML version and type of desired output. In the example of an embodiment of the present invention, this may be accomplished by using the following two lines:

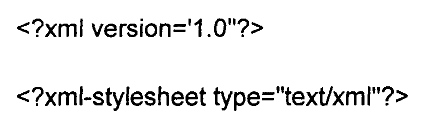

The XSL definition has a root element *xsl:stylesheet* with attributes *version* and *xmlns:xsl.* An example of declaring XML namespace for an embodiment of the current invention is as follows:

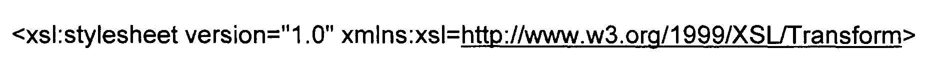

An advantage of the present application is that the language may be changed locally at run-time. Therefore, a second example is provided which shows the use of the present invention using Finnish language as the example text.

In order to support western and scandinavian character sets, the output coding must be set to ISO-8859-1, e.g.:
<xsl:output encoding="ISO-8859-1"/>

Thus, XSL-files may be of the form:

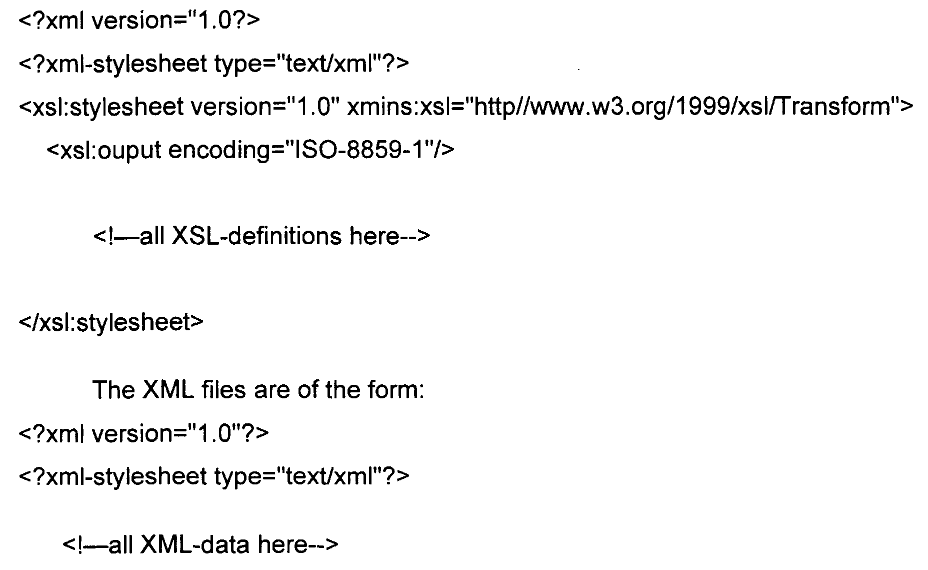

The following is an example of implementation of XSL templates. In an embodiment of the present invention, Finnish component versions are used. Thus, the component specifications are given in files:

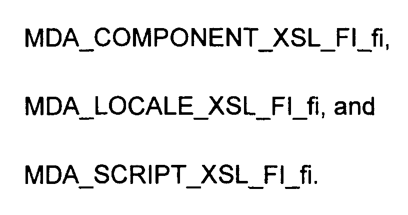

These files are all actually XSL files, which tell the processor to copy all the content from the input stream to the output stream, and replace some tags with something else. These are called component specification files.

For example, if there is to be no change to any component tags, all the component specification files may look like this:

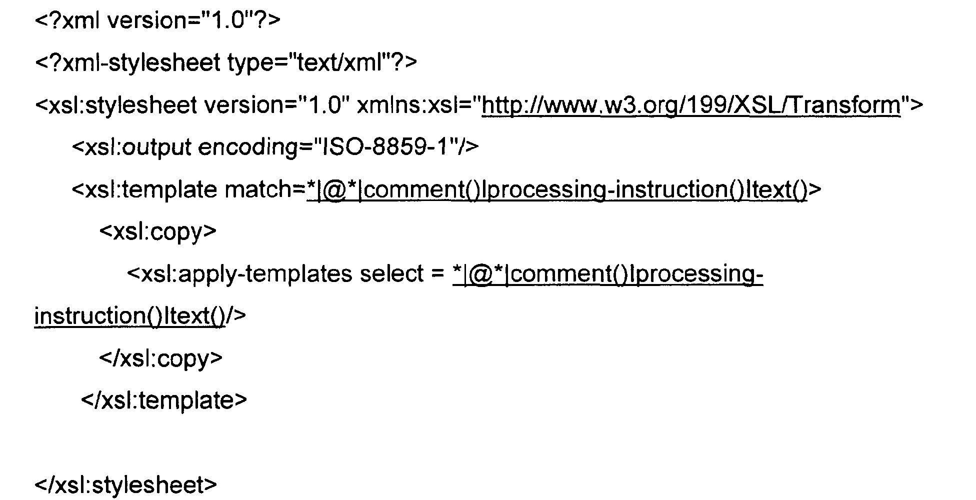

### Example Listing 1: Empty component specification file

This component specification file simply orders the processor to copy all the input to the output as it is.

Let us use the following XSL template as an example in the following chapters.

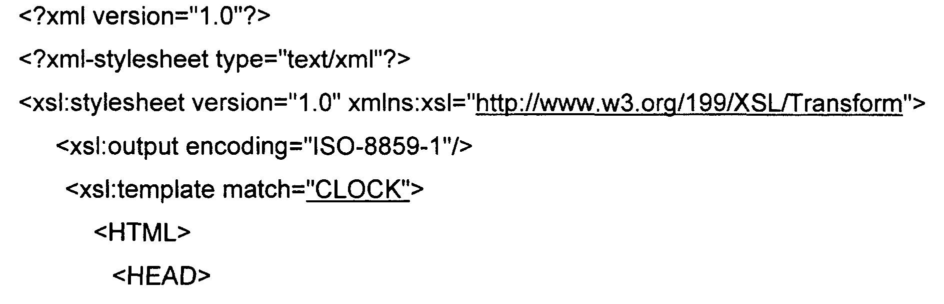

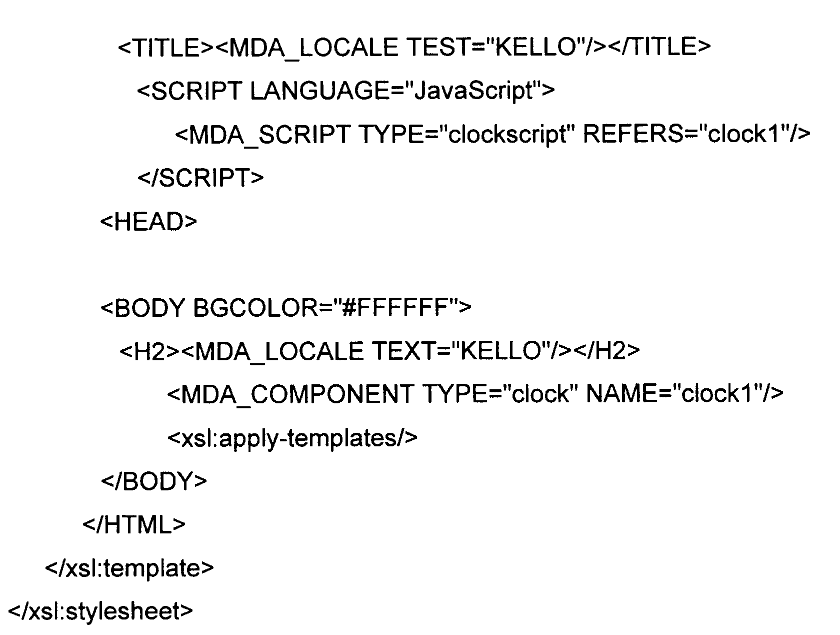

### Example Listing 2: XSL template 120.

The example file of our preferred embodiment contains four component tags:

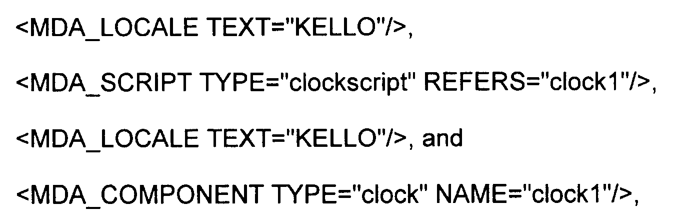

### XSL COMPONENTS

Referring again to Fig. 5, in first conversion 130, if a match to the parameter "type" is found from the component specification file MDA_COMPONENT_XSL 125, then all component tags of type MDA_COMPONENT are replaced with a specified set of tags. If no match to the parameter "type" is found from the component specification file MDA_COMPONENT_XSL 125, then the MDA_COMPONENT tag is discarded.

An example component specification file which processes
MDA_COMPONENT is shown below.

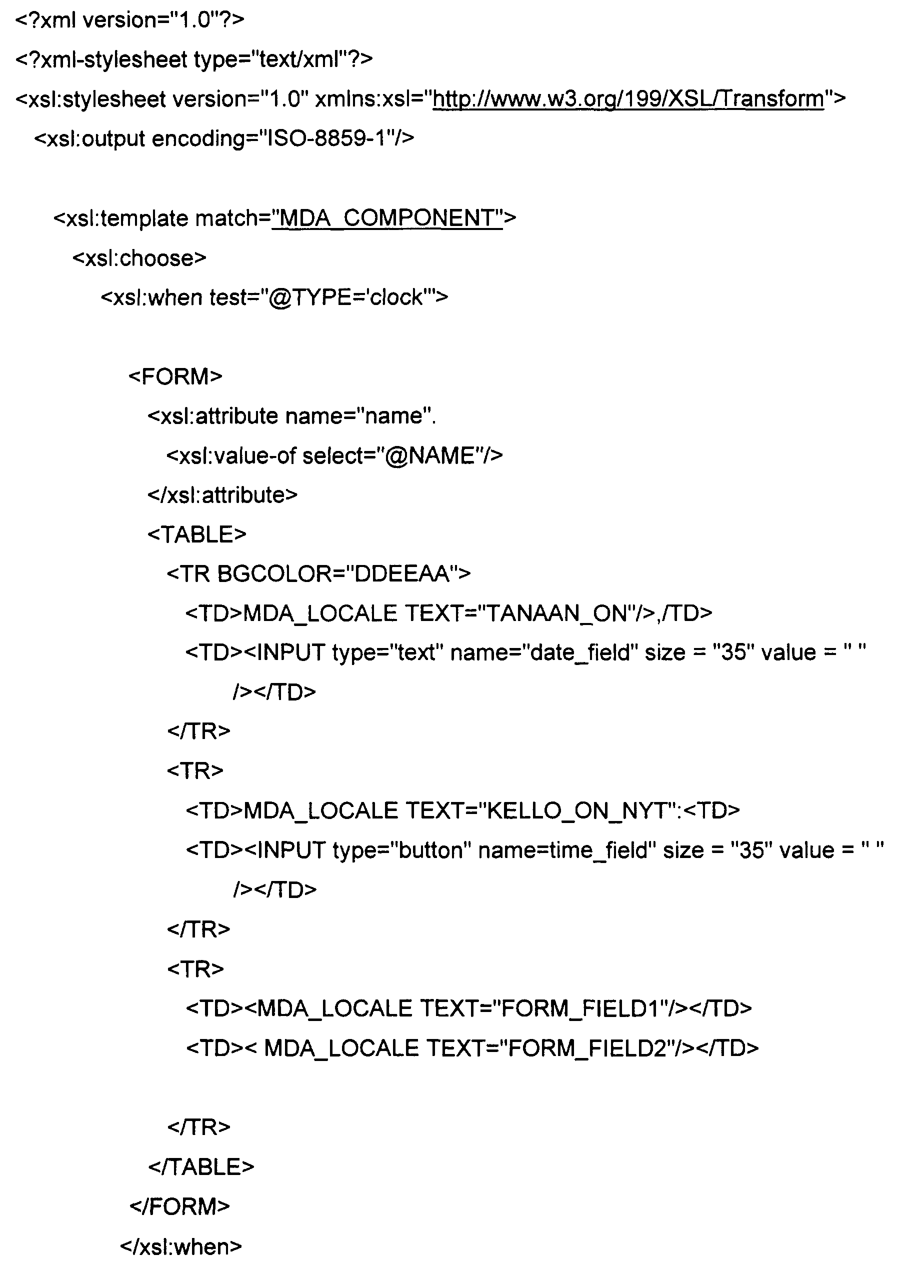

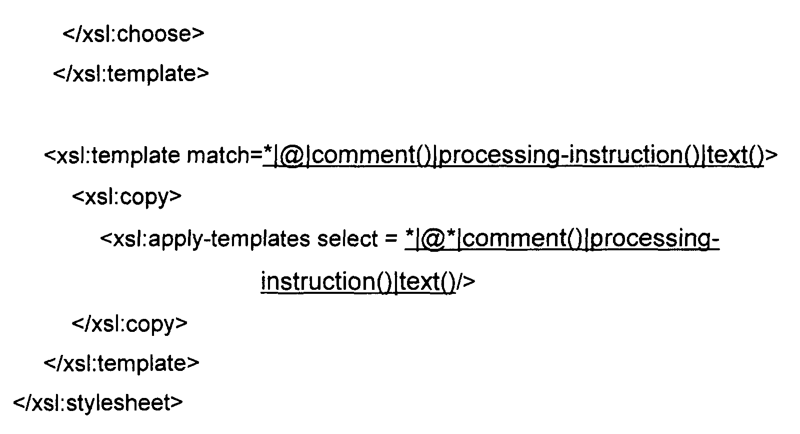

### Listing 3: Component specification file for MDA_COMPONENT tags MDA_COMPONENT_XSL 125.

The component specification file MDA_COMPONENT_XSL 125 only replaces the MDA_COMPONENT tags having "clock" as a value of their "type" parameters. Such tags are replaced with HTML Form specification. In the example described in accordance to an embodiment of the current invention, the tag <MDA_COMPONENT TYPE="clock" NAME="clock1"/> is replaced with a form.

After first conversion 130, the XSL template 120 (example listing 2), is now converted XSL-template 133 and looks like this:

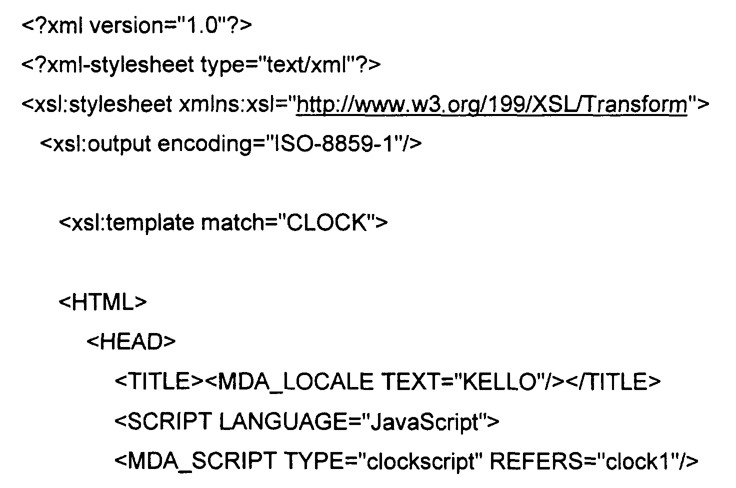

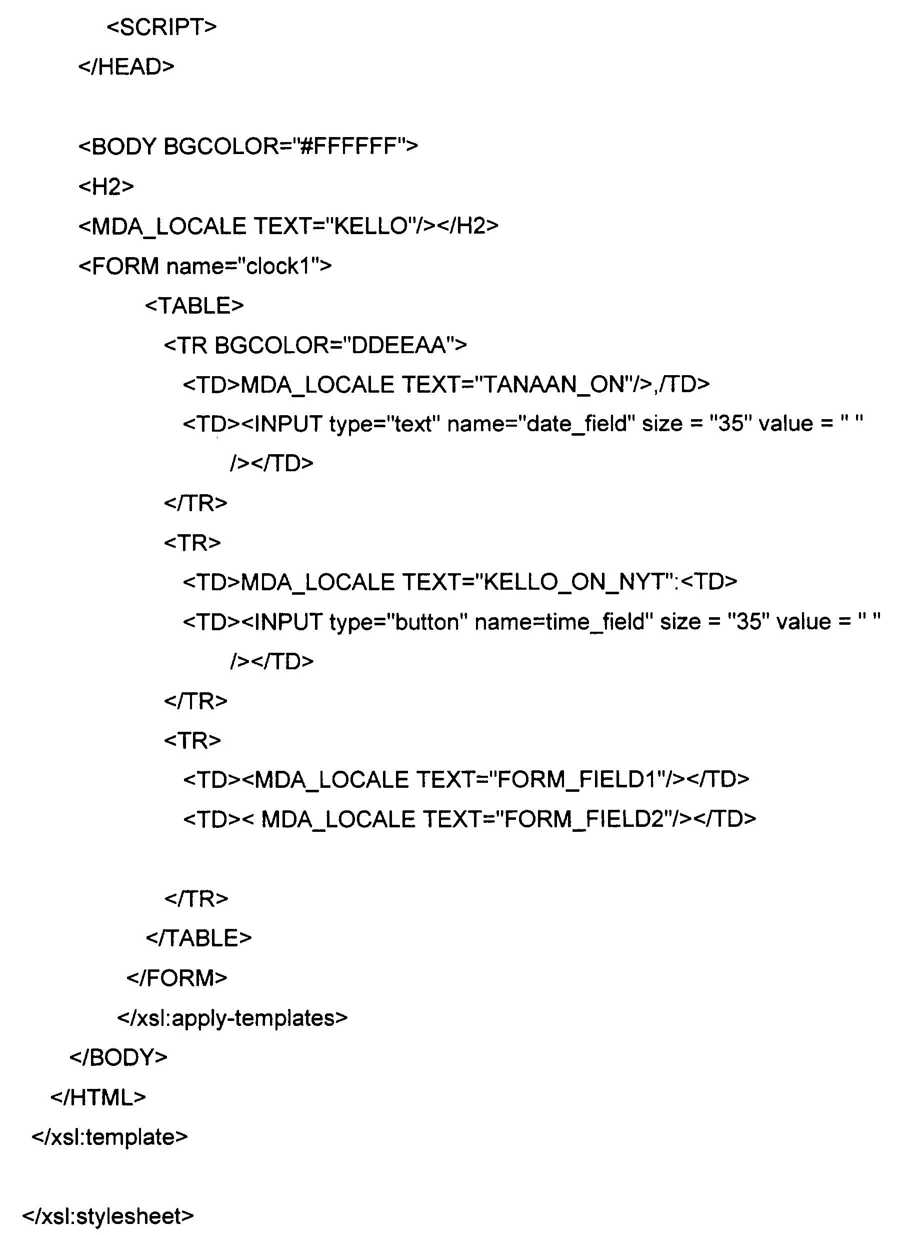

### Listing 4 : XSL template 133 after the first conversion 130.

### XSL LOCALES

Referring once again to Fig. 5, in second conversion 140, all the component tags of type MDA_LOCALE are replaced with given text. If a match to the parameter "text" is found from the component specification file MDA_LOCALE_XSL 135, then all component tags of type MDA_LOCALE are replaced with a specified set of tags. If no match to the parameter "text" is found from the component specification file MDA_ LOCALE_XSL 135, then the MDA_LOCALE tag is discarded.

Component specification file MDA_LOCALE_XSL 135 as described below replaces the MDA_LOCALE tags with localized texts.

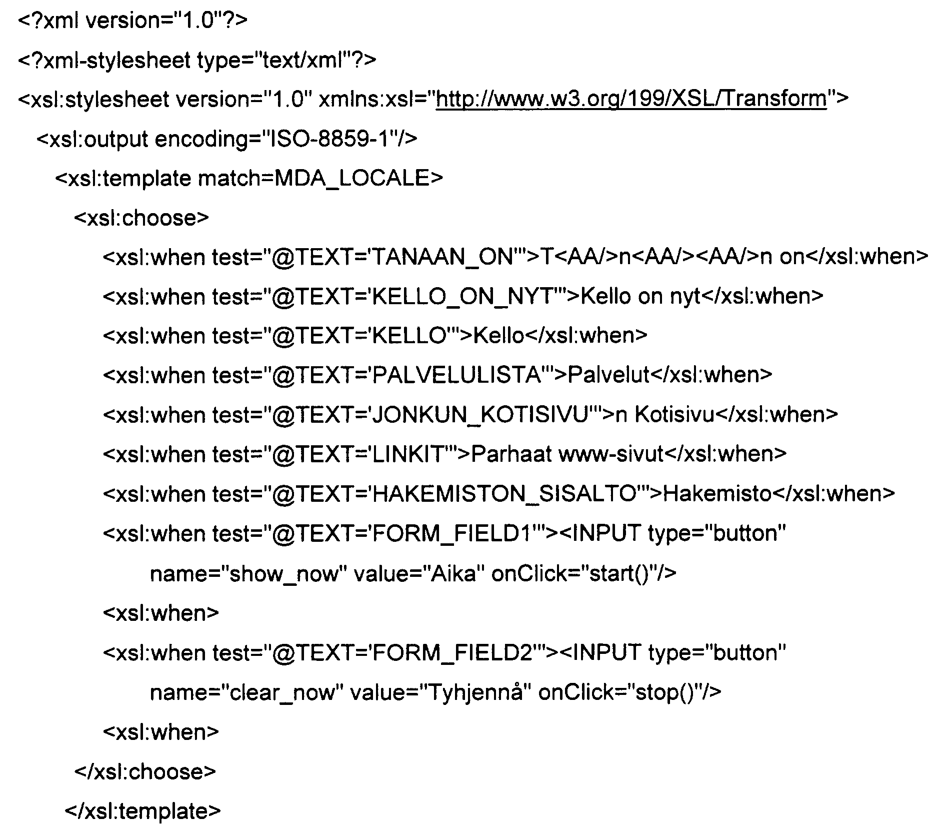

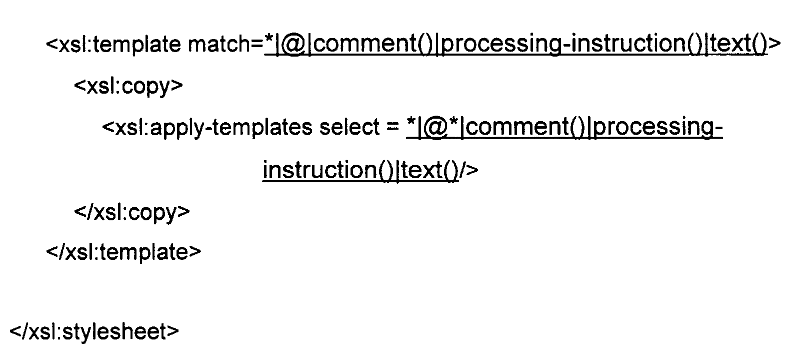

### Listing 5: The component specification file for MDA_LOCALE tags 135.

In the example of an implementation of an embodiment of the current invention, on the tag <MDA_LOCALE TEXT="TANAAN ON"/> is replaced with Finnish text "Tånåån on", the tag <MDA_LOCALE TEXT="KELLO_ON_NYT"/> is replaced with Finnish text "Kello on nyt", and the tag <MDA_LOCALE TEXT="KELLO"/> is replaced with Finnish text "Kello" and so forth.

In second conversion 140, the component specification file 125 (example listing 5) is applied to XSL template 133 (example listing 4) resulting in converted XSL template2 143.

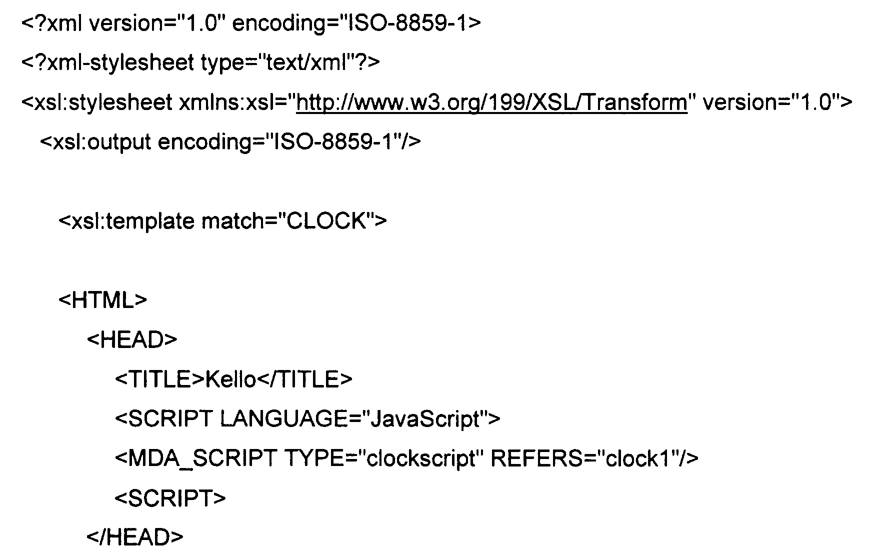

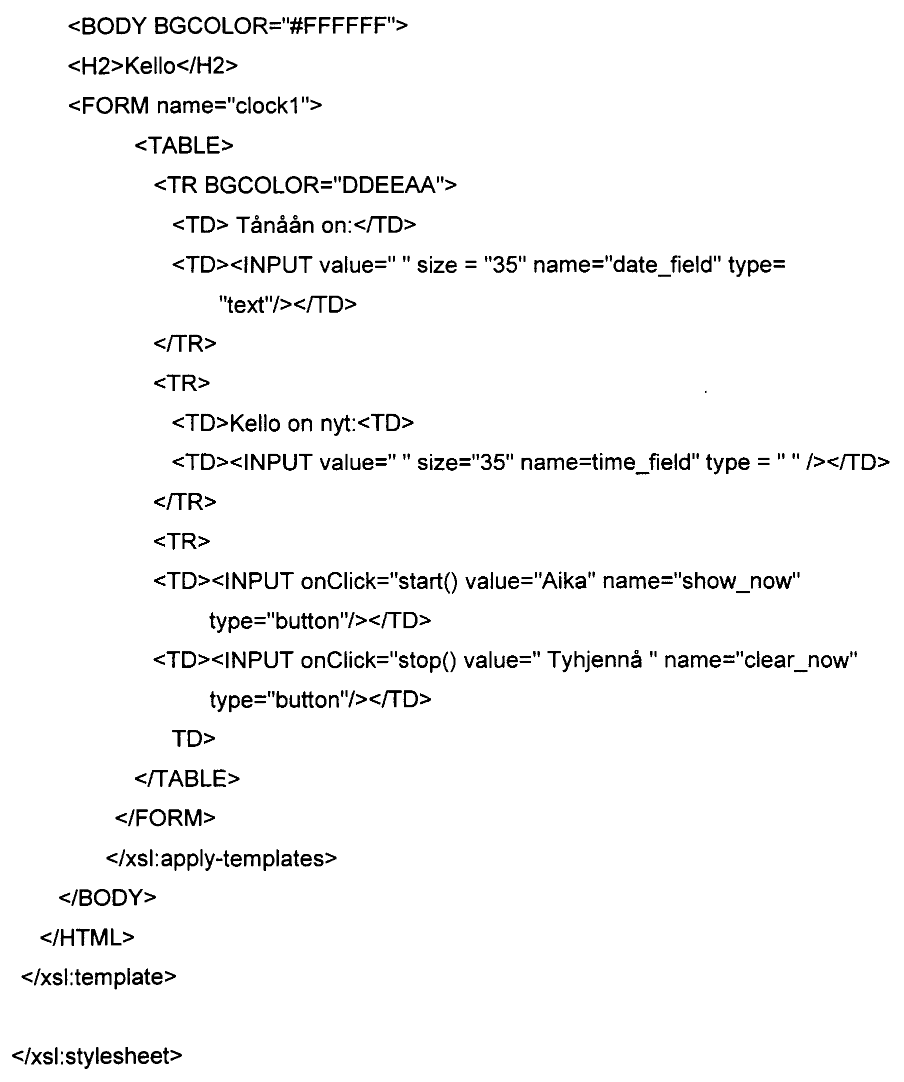

### Listing 6: XSL template 143 after second conversion 140.

### XSL SCRIPTS

Referring yet again to Fig. 5, in third conversion 150, if a match to the parameter "type" is found from the component specification file MDA_SCRIPT_XSL 145, then all component tags of type MDA_LOCALE are replaced with a specified set of tags. If no match to the parameter "type" is found from the component specification file MDA_ SCRIPT_XSL 145, then the MDA_SCRIPT tag is discarded.

Component specification file MDA_SCRIPT_XSL 145 as described below replaces the MDA_SCRIPT tags with script code.

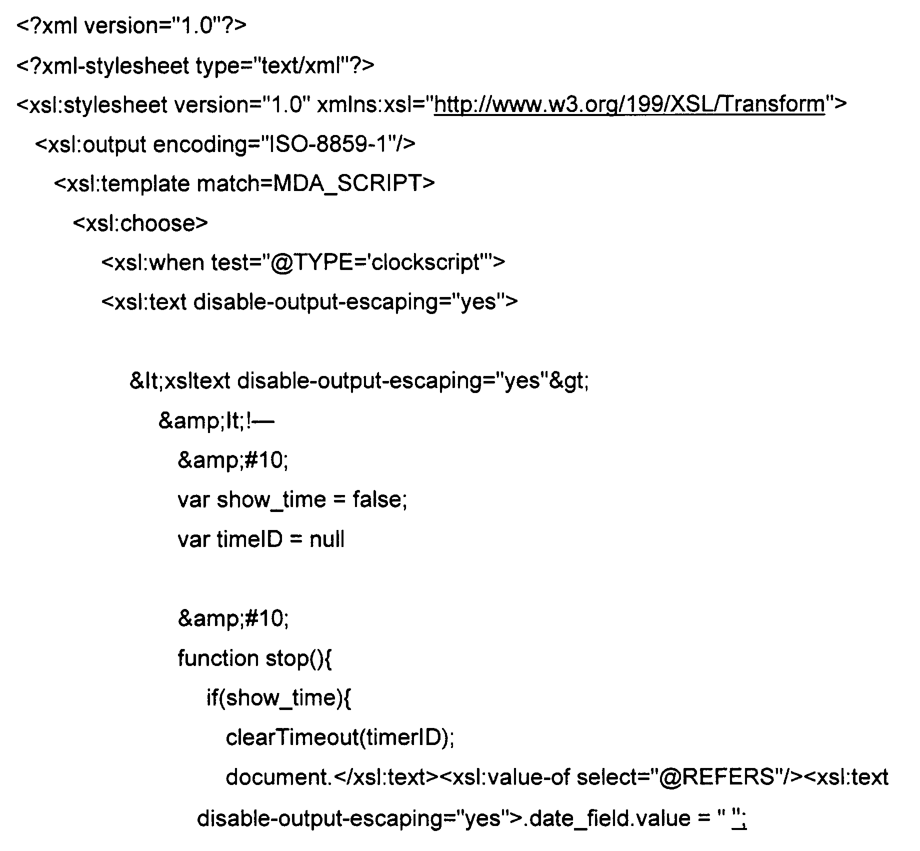

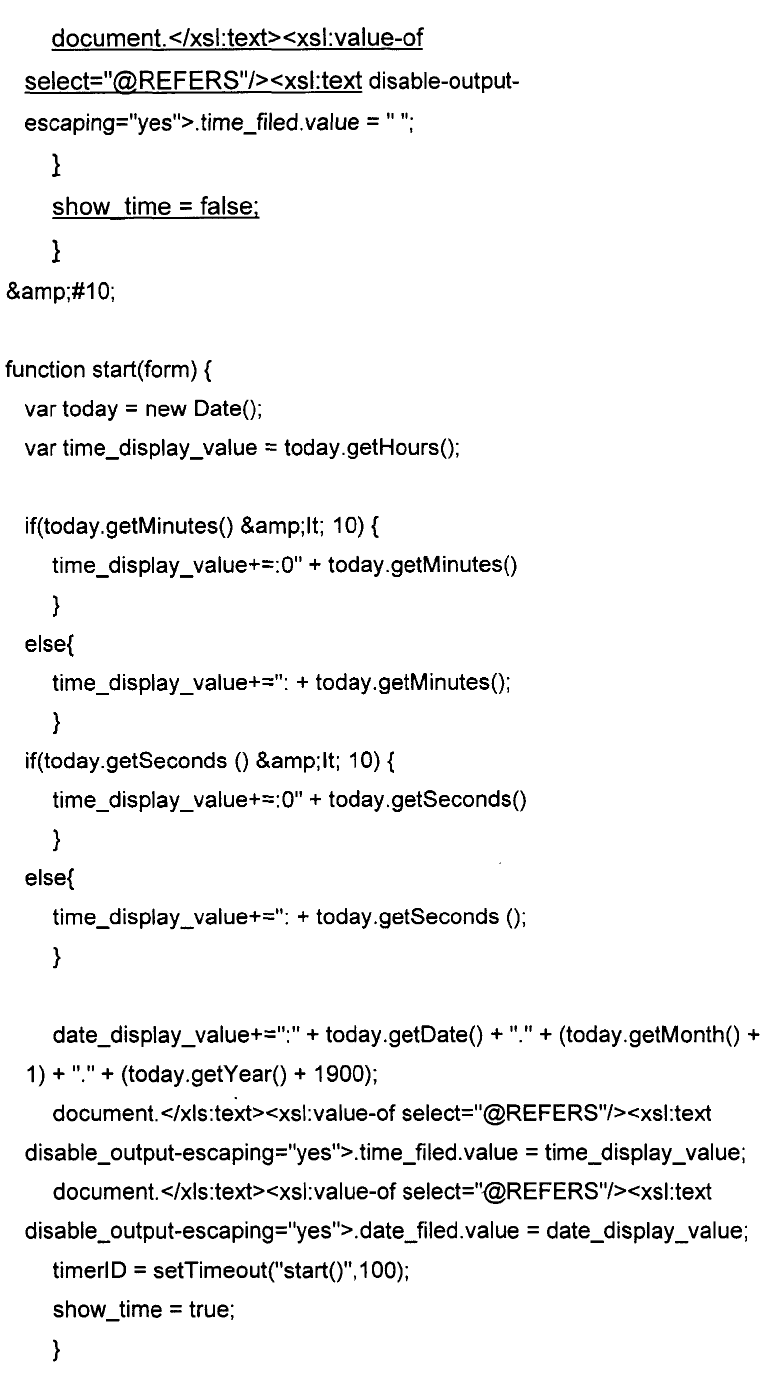

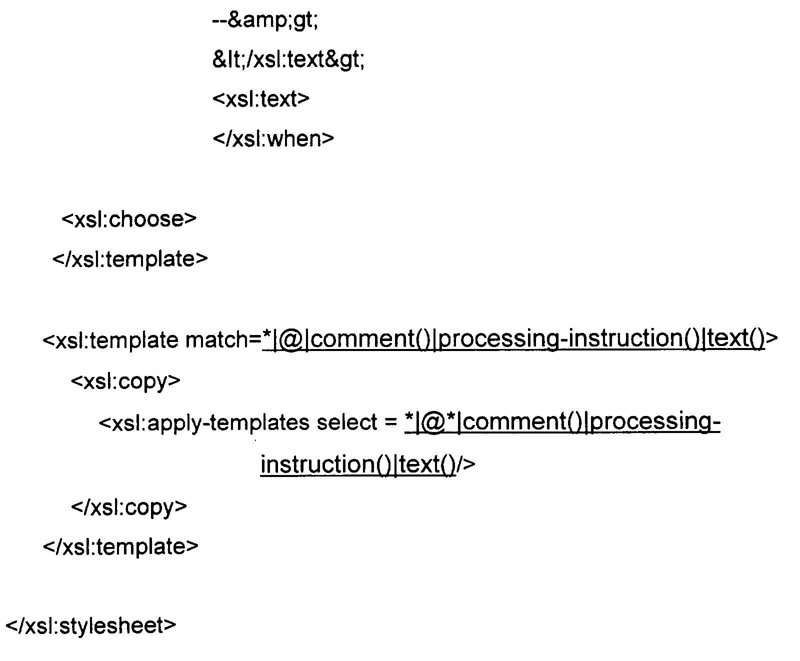

### Listing 7: The component specification file 145 for MDA_SCRIPT tags.

In the example used of an implementation of an embodiment of the current invention, the tag <MDA_SCRIPT TEXT="clockscript" REFERS="clock1/> is replaced with JavaScript code.

MDA_SCRIPT components must put all the script code inside <xsl:text disable-output-escaping="yes"> begin tag and </text> end tag, as can be seen from the example. The script specification must begin with: 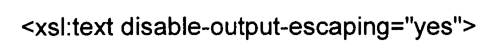 followed by:

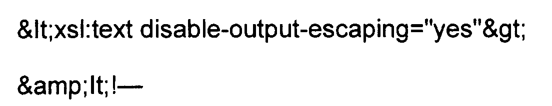

The scrip[t specification must end with: 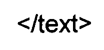 followed by:

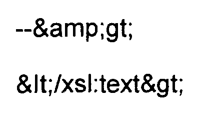

This inverted texts will result in correct HTML comment tags: "<!―" and "-->".

In third conversion 150, the component specification file MDA_SCRIPT_XSL 145 (example listing 7) is applied to XSL template 143 (example listing 6). Conversion 150 results in XSL template 153.

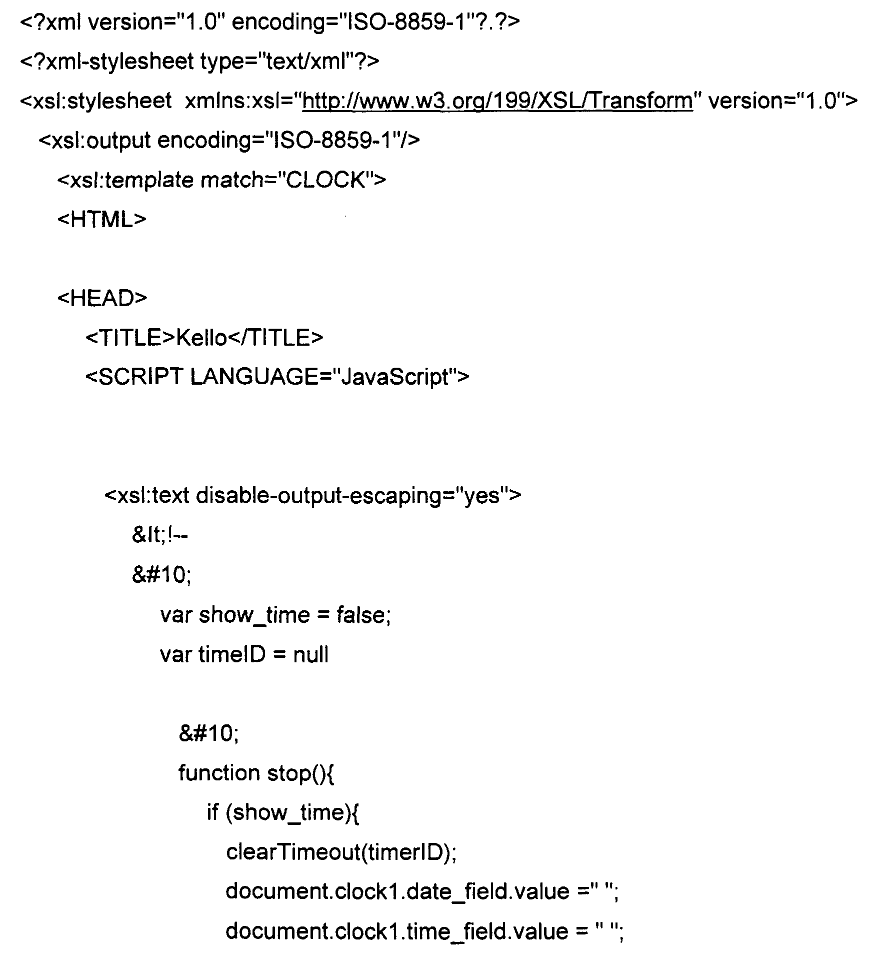

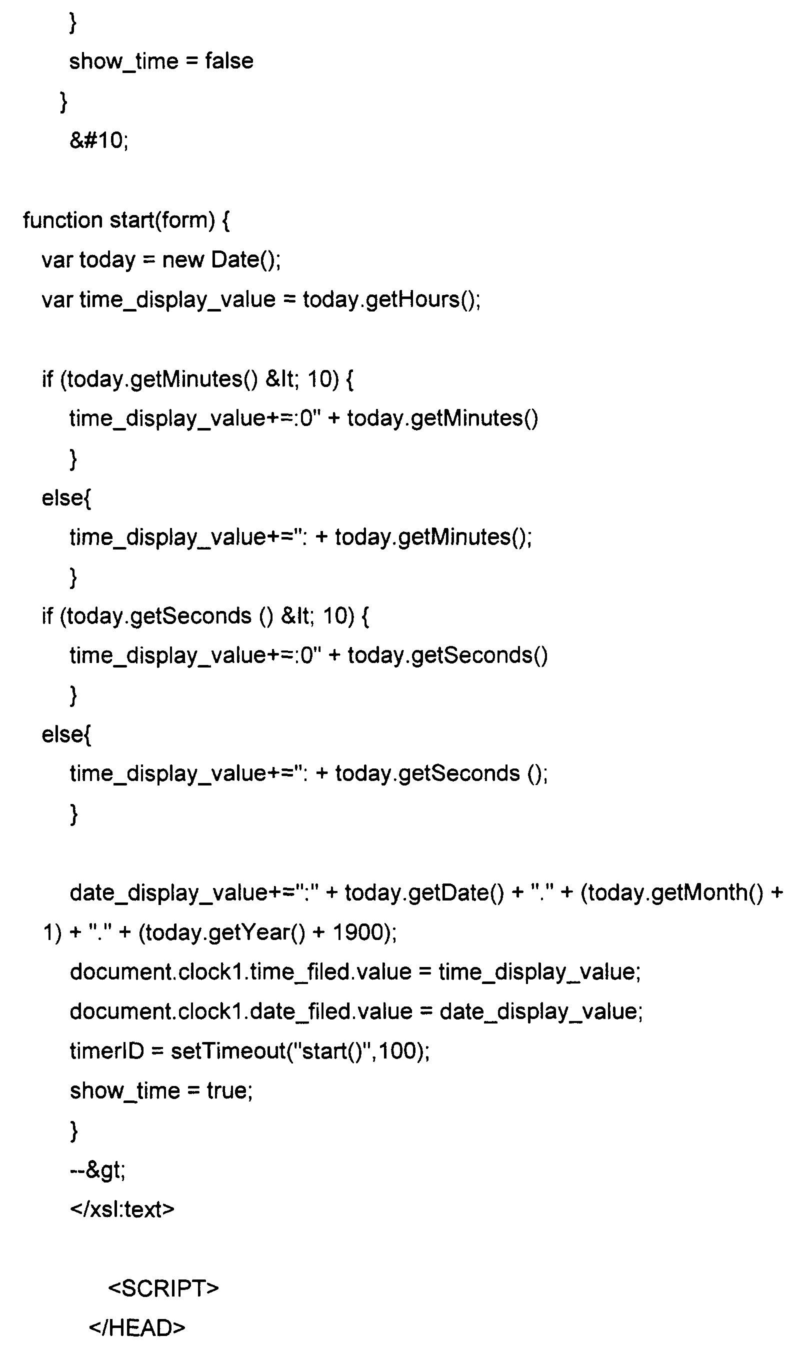

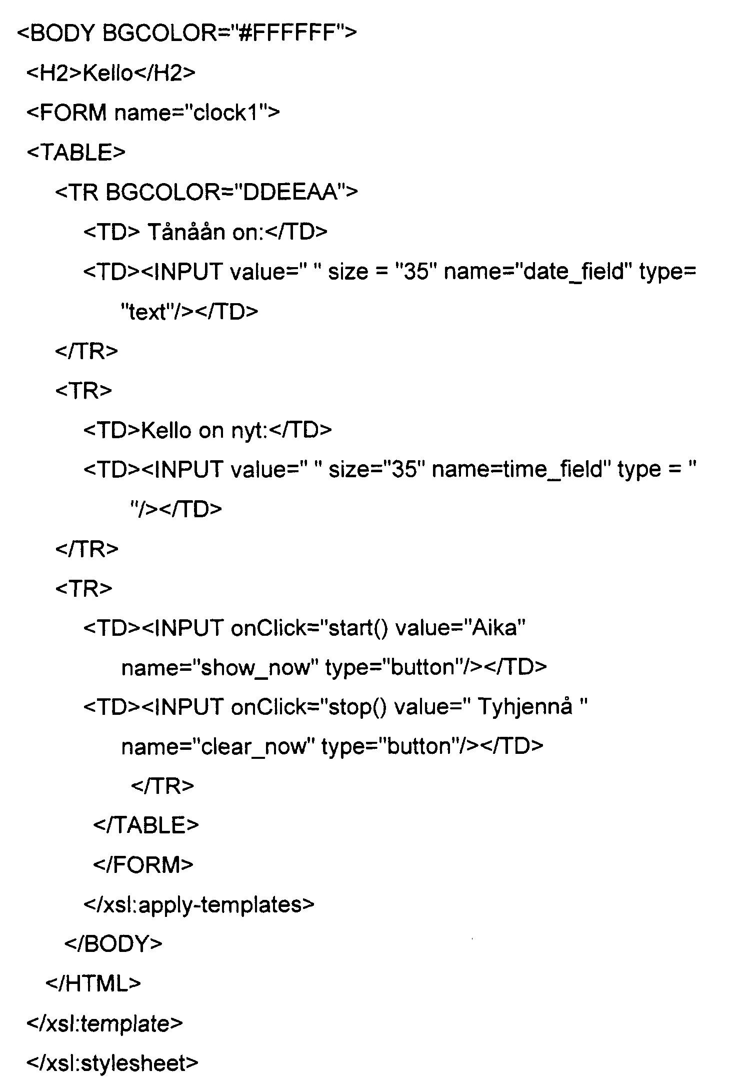

### Example Listing 8: XSL template 153 after third conversion 150.

Thus, we have final XSL template 153 (example list 8). When applying it to XML data file 155 (example list 9) we get the HTML page with a simple clock implemented in JavaScript (example listing 10).

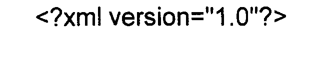

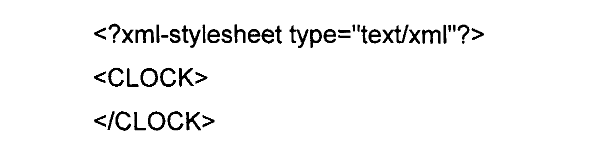

### Example Listing 9: XML data 155.

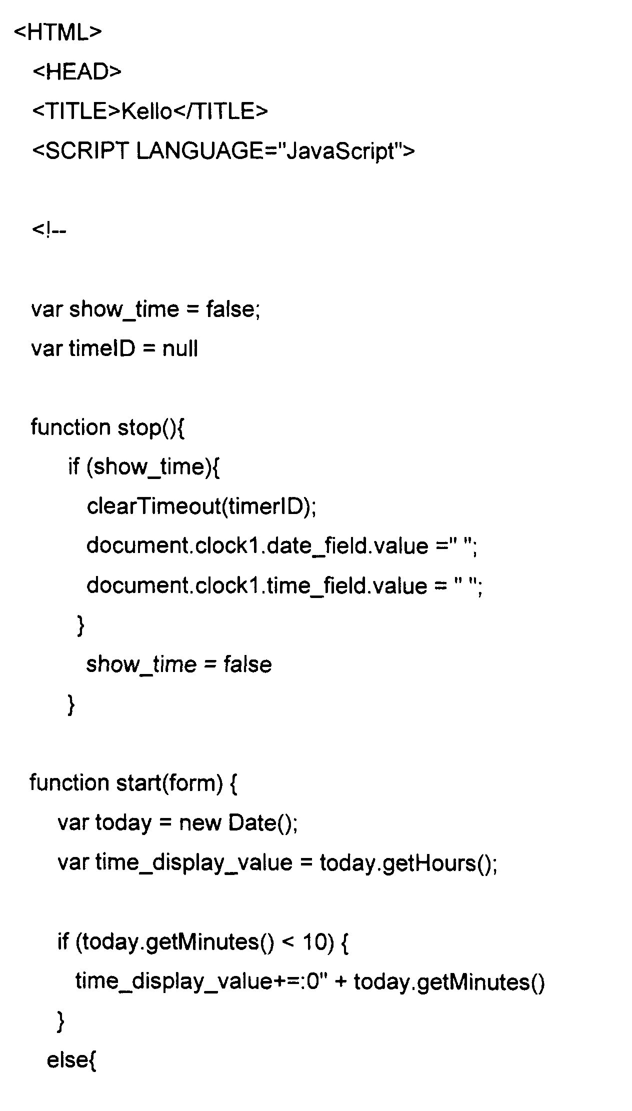

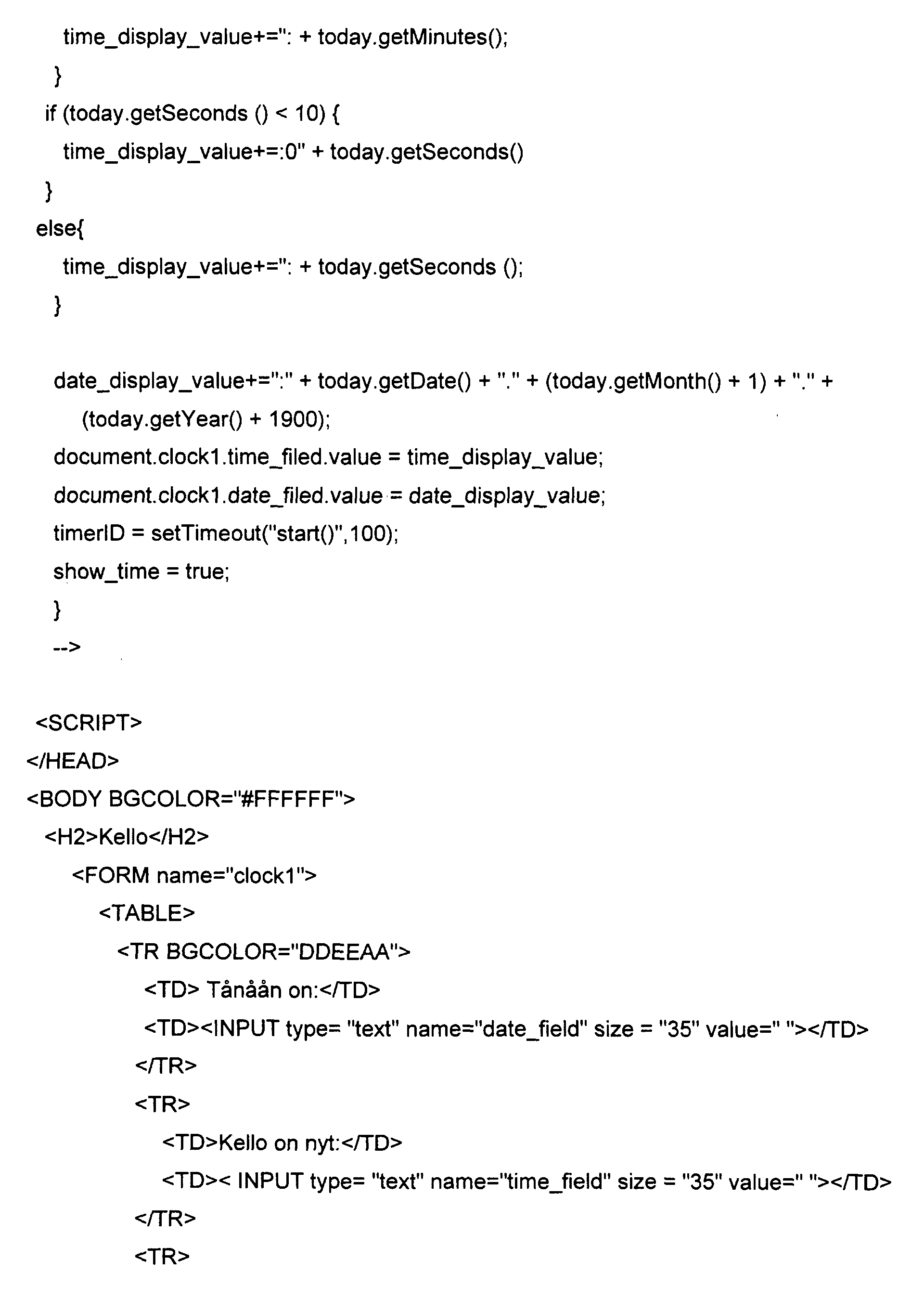

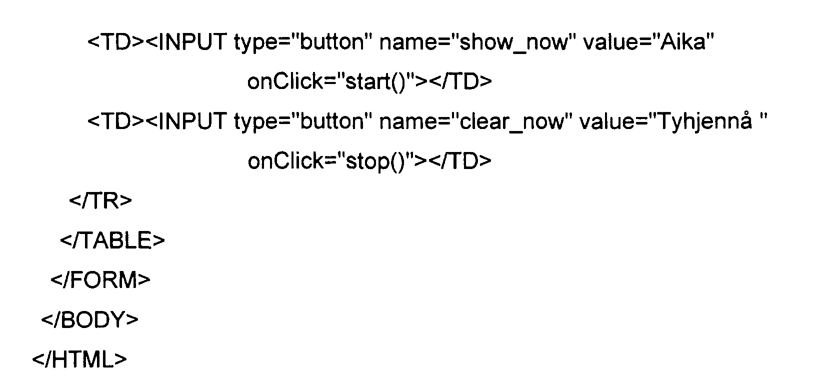

### Example Listing 10 Final HTML component for user view 170.

Function "start" is called when the user clicks button "aika (Finnish word for "time"). Start function updates the current date and time into the fields of an HTML form. A pointer to the form is sent to the start function as a parameter ("form"). Start function sets the timer so that it is called again after one second. Thus, the time of the form field is updated again and again every second.

Stop function is called when the user clicks button "Tyhjennå" (Finnish for "clear"). This function clears the form fields and clears the timer.

This invention has been described relative to specific embodiments and is described with examples of code. The example functions are written according to JavaScript 1.1 standard. However, one skilled in the art after reading the specifications can appreciated that any future version or like language may be substituted without departing from the spirit and scope of the invention. Furthermore, modifications that become apparent to persons of ordinary skill in the art only after reading this document are deemed within the spirit and scope of the invention.

Applicant's use of the term "plurality" shall be defined as one or more.

## Claims

1. A method for generating a template for construction of a document user view comprising the steps of:
converting a first template containing style information in compliance with a first set of instructions into a second template;
converting said second template in compliance with a second set of instructions into a third template; and
converting said third template in compliance with a third set of instructions into a fourth template storing said fourth template into memory.

2. The method of claim 2 further comprising the step of:
applying said fourth template to data in a first language and converting
said data in a first language into data of a second language.

3. A computer-readable memory for directing a computer to function in a particular manner when used by the computer, comprising:
a first portion to direct the computer to convert a first template containing style information in compliance with a first set of instructions into a second template;
a second portion to direct computer to convert said second template in compliance with a second set of instructions into a third template ;
a third portion to convert said third template in compliance with a third set of instructions into a fourth template;
a fourth portion to direct computer to apply said fourth template to data in a first language and convert said data in a first language into data of a second language; and
a fifth portion to direct computer to store said data into memory.

4. A computer data signal embodied in a carrier wave, comprising instructions for:
converting a first template containing style information in compliance with a first set of instructions into a second template;
converting said second template in compliance with a second set of instructions into a third template;
converting said third template in compliance with a third set of instructions into a fourth template; and
storing said fourth template into a memory.

5. The computer data signal of claim 4 further comprising the instruction for:
applying said fourth template to data in a first language and converting said data in a first language into data of a second language.

6. A mobile communications device configured to operate according to a method as claimed in claim 1.

7. A computer program for use with data processing apparatus to perform a method as claimed in claim 1.

8. A computer program according to claim 7 and including code as set out in any one of Examples 1 to 9 of the description.

9. A network configured to operate in accordance with the method claimed in claim 1.
